# FASCICULE DE BREVET EUROPEEN

(11) **EP 2 751 982 B1**
(45) Date de publication et mention de la délivrance du brevet: **07.10.2015**
(21) Numéro de dépôt: 12745882.6
(22) Date de dépôt: 14.08.2012
(51) Int. Cl.: H04M 19/00, H04M 3/00, H04M 3/30

(54) **PROCÉDÉ D'OPTIMISATION DE LA CONSOMMATION ÉLECTRIQUE D'UNE PASSERELLE RÉSIDENTIELLE**
VERFAHREN ZUR OPTIMIERUNG DES STROMVERBRAUCHES EINES HEIM-GATEWAYS
METHOD OF OPTIMIZING THE ELECTRICAL CONSUMPTION OF A RESIDENTIAL GATEWAY

(30) Priorité: 01.09.2011 FR 1157739
(43) Date de publication de la demande: 09.07.2014
(73) Titulaire: Sagemcom Broadband SAS, 92500 Rueil Malmaison (FR)
(72) Inventeur: DANGY-CAYE, Nicolas, F-92500 Rueil Malmaison (FR); JAULIN, Jean-Philippe, F-92500 Rueil Malmaison (FR); CAPDEVIELLE-FIDEL, Laurent, F-92500 Rueil Malmaison (FR)
(74) Mandataire: Maillet, Alain
(86) Numéro de dépôt international: PCT/EP2012/065892
(87) Numéro de publication internationale: WO 2013/029991

(56) Documents cités:
- US-A1- 2010 054 426
- US-A1- 2011 081 014
- US-B1- 6 351 528

## Description

La présente invention concerne un procédé et un dispositif d'optimisation de la consommation électrique d'une passerelle résidentielle.

Les passerelles résidentielles actuelles offrent à un usager la possibilité de recevoir un appel ou d'appeler un correspondant distant par accès à un service VoIp (*Voice Over Internet Protocol* en anglais) en raccordant, via un câble, un téléphone analogique soit directement à cette passerelle soit par l'intermédiaire d'une base par DECT. Le téléphone établissant alors une liaison sans fil avec cette base.

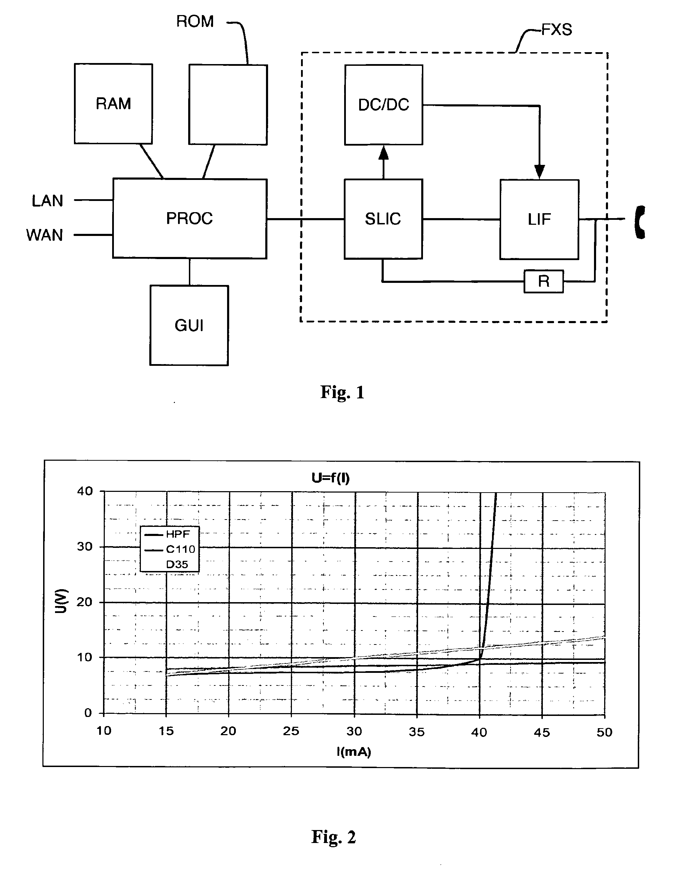

A cette effet, comme illustré à la Fig. 1, la passerelle résidentielle comporte, reliée par un bus de communication, un ensemble de moyens, largement connus de l'état de la technique tels qu'un processeur, micro-processeur, microcontrôleur (noté µc) ou CPU *(Central Processing Unit* en anglais ou *Unité Centrale de Traitement* en français) PROC, une mémoire vive RAM *(Random Access Memory* en anglais ou *Mémoire à Accès Aléatoire* en français), une mémoire morte ROM *(Read Only Memory* en anglais ou *Mémoire à Lecture Seule* en français), des moyens d'interface (non représentés) avec un réseau de communication, comme par exemple un réseau local *(Local Are Network* en anglais) et/ou un réseau plus longue distance *(Wide Area Network* an anglais) pour assurer la continuité de ce service VoIP alors accessible à partir de ce ou ces réseaux.

Elle comporte également un voire plusieurs ports FXS pour assurer la continuité du service téléphonique numérique entre la passerelle et le téléphone ou la base raccordée à cette passerelle via le câble formant une ligne (au sens téléphonie du terme).

Un port FXS assure la génération de signal d'appel, le support et la transmission des signaux dans les sens émission et réception ainsi que le traitement de ces signaux, la reconnaissance de la signalisation de ligne c'est-à-dire la gestion des signaux qui permettent de détecter le décrochage du téléphone, son raccrochage, le signal de rappel d'enregistreur et la reconnaissance de la numérotation décimale et de la numérotation multifréquence.

En des termes fonctionnels, un port FXS est classiquement découpé en plusieurs sous-blocs qui incluent, notamment, une interface de ligne LIF qui assure les paramètres analogiques de la ligne reliant la passerelle au téléphone ou à la base, une unité SLIC *(Subscriber Line Interface Circuit* en anglais) et un convertisseur programmable de courant continu DC/DC piloté par l'unité SLIC. L'interface de ligne LIF est reliée, notamment, d'une part, à la ligne et, d'autre part, au convertisseur DC/DC et à l'unité SLIC. L'unité SLIC est reliée, également, d'une part, au convertisseur DC/DC et, d'autre part au processeur PROC. La passerelle peut comporter également deux résistances R montées entre la ligne et l'unité SLIC. Ces résistances permettent de connecter le Tip et le Ring du port FXS au convertisseur analogique numérique intégré à l'unité SLIC et ainsi d'effectuer des mesures en courant ou en tension sur l'interface.

L'une des fonctionnalités de l'ensemble unité SLIC, convertisseur DC/DC et interface LIF, est d'assurer l'alimentation, en termes de tension et de courant, de la ligne. En ce sens, cet ensemble s'apparente aux unités SLIC qui équipent traditionnellement les centraux téléphoniques de raccordement d'un réseau téléphonique commuté *(PSTN en* anglais).

En effet, il est connu qu'une ligne d'un réseau téléphonique commuté soit alimentée en permanence pour que le téléphone analogique puisse fonctionner à la fois en mode décroché, pour offrir une qualité de communication acceptable, et en mode raccroché, pour permettre au téléphone de recevoir les signaux de signalisation c'est-à-dire, par exemple, pour que ce téléphone puisse détecter un nouvel appel entrant et le signaler par activation d'une sonnerie du téléphone. Pour cela, en mode raccroché, des caractéristiques de tension et de courant de ligne particulières sont appliquées à la ligne et en mode décroché, d'autres caractéristiques de tension et de courant de ligne s'appliquent à cette ligne.

En effet, un téléphone analogique requiert une tension et un courant de ligne minimaux pour fonctionner en mode raccroché et les valeurs de cette tension et de ce courant sont différentes de celles requises en mode décroché. A titre d'exemple, la Fig. 2 représente des courbes tension/courant qui sont habituellement utilisées pour caractériser le comportement électrique de téléphones du type HPF, C110 et D35.

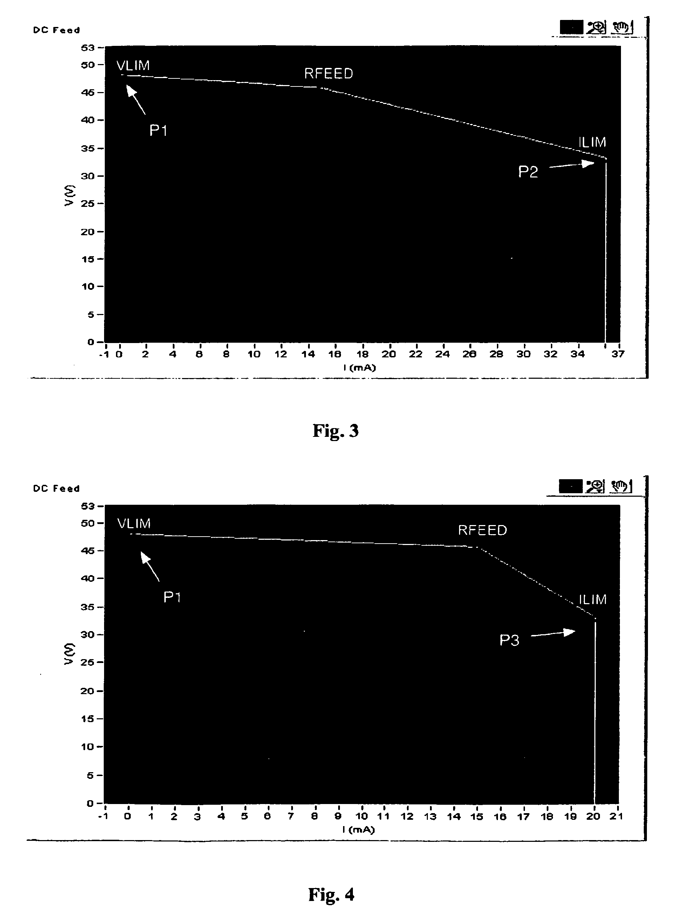

Pour s'assurer que l'ensemble des téléphones existants puisse correctement fonctionner à partir de leurs passerelles résidentielles, les opérateurs de téléphonie configurent chaque port FXS de leurs passerelles selon une courbe courant/tension appelée par la suite courbe de défaut telle que illustrée à la Fig. 3. Cette caractéristique courant/tension est remarquable par un couple de points de polarisation de défaut P1 et P2 qui définit des caractéristiques de tension et de courant de ligne maximales à appliquer sur la ligne dès lors qu'un téléphone analogique est raccordé à un port FXS. Tel qu'illustré dans la Fig. 3, le point P1 définit la tension de repos, ici de l'ordre de 46V, lorsque le téléphone est raccroché et que le courant de ligne est nul. Le point P2 définit le courant de limitation de l'interface, ici de l'ordre de 36mA, appliquée lorsque la tension de polarisation est inférieure ou égale à une certaine tension, ici de l'ordre de 33V. La polarisation de fonctionnement en mode décroché résulte du point de croisement des deux courbes courant/tension de l'interface (Fig. 3) et du téléphone (Fig. 2). En pratique, en mode décroché, le courant de limitation est généralement atteint et la tension dépend du téléphone raccordé.

En pratique, ce couple de points de polarisation de défaut est mémorisé dans une mémoire non volatile de la passerelle telle que par exemple la mémoire ROM. En fonctionnement, le port FXS est configuré à partir de ce couple de points de polarisation de défaut, c'est-à-dire que l'unité SLIC de ce port FXS est programmée par le processeur PROC venant lire des caractéristiques de tension et de courant de ligne dans la mémoire ROM.

Lorsque la consommation sur l'interface est nulle, c'est-à-dire en mode raccroché, la tension du point P1 est appliquée au travers de l'interface de ligne LIF. Lorsque la consommation sur cette interface augmente (mode décroché), le convertisseur DC/DC adapte sa tension pour suivre la courbe de polarisation programmée et/ou limite le courant de ligne à la valeur limite déterminé par le point P2.

Ainsi, en fonction des caractéristiques intrinsèques du téléphone raccordé sur le port FXS, des variations de tension et de courant, et donc de consommation électrique de ce port FXS vont donc inéluctablement se produire d'un téléphone à l'autre et ce pour un couple de points de polarisation de défaut donné. Ces variations vont induire parfois une consommation électrique excessive pour un type de téléphone donné car un courant de ligne plus faible pourrait suffire à ce type de téléphone sans pour autant dégrader la qualité du service de téléphonie rendu pour ce type de téléphone.

Le problème est donc d'optimiser la puissance consommée par un téléphone tout en permettant à l'ensemble du parc de téléphones existants de pouvoir fonctionner correctement.

Dans ce contexte d'économie d'énergie, une approche est de configurer le port FXS à partir d'un couple de points de polarisation réduite, en définissant par exemple, des intensités de courant de ligne et/ou des valeurs de tension de ligne bien inférieures à celles relatives au couple de points de polarisation classiquement utilisé.

Toutefois, cette approche, qui permet un gain significatif pendant les phases de communication, engendre plusieurs problèmes.

Tout d'abord, une diminution trop importante de l'intensité de courant de ligne et/ou de la tension de ligne maximale peut engendrer un dysfonctionnement de certains téléphones si ce courant est trop faible et/ou la tension de ligne est insuffisante par rapport aux courbes tension/courant de ces téléphones. Ce problème d'insuffisance d'alimentation de ligne peut se produire à la fois dans le mode décroché mais également dans le mode raccroché ce qui provoque un sérieux dysfonctionnement du téléphone qui ne peut même plus détecter, parfois, un nouveau signal d'entrée ni émettre une sonnerie. Diminuer l'intensité de courant de ligne et/ou la tension de ligne n'assure donc pas le bon fonctionnement de l'ensemble du parc de téléphones existant.

Par ailleurs, ce couple de points de polarisation réduite peut être interprété par certains téléphones comme des conditions de lignes longues au sens de la téléphonie classique. Ce type de téléphone, par exemple le S63, compense alors ces conditions de raccordement particulières en modifiant ses caractéristiques internes de transmission. Cette compensation de puissance appliquée par le téléphone modifie la nature du signal téléphonique et dénature la perception de la communication. Il en résulte alors une dégradation de la qualité globale de la communication qui peut devenir en deçà des exigences de l'opérateur. De plus, la puissance électrique fournie au téléphone peut ne pas être suffisante pour que ce téléphone fonctionne correctement.

La publication de demande de brevet US 2011/081014 A1 décrit un circuit d'interface de ligne d'abonné stockant en mémoire deux profils de polarisation, un profil parmi ces deux profils de polarisation étant sélectionné en fonction de valeurs de résistance de boucle respectivement déterminées avec ces deux profils de polarisation.

La publication de demande de brevet US 2010/054426 A1 décrit un procédé d'optimisation de consommation électrique d'une passerelle résidentielle comportant au moins un port FXS auquel est raccordé un téléphone analogique via une ligne, de sorte que de nouvelles plages de valeurs (courant, tension de linge) sont déterminées en réponse au succès d'un appel.

La publication de brevet US 6,351,528 B1 décrit un dispositif qui fournit des signaux de sonnerie à un poste téléphonique et qui détecte des impédances alternatives de boucle.

Le problème résolu par la présente invention est de remédier aux inconvénients suscités.

A cet effet, la présente invention concerne un procédé d'optimisation de la consommation électrique d'une passerelle résidentielle comportant au moins un port FXS auquel est raccordé un téléphone analogique via une ligne. Ledit port FXS étant configuré à partir d'un couple de points de polarisation (PPD), dit de défaut, qui définit des caractéristiques de tension et de courant maximales de la ligne qui sont prédéterminées pour assurer le bon fonctionnement du téléphone en mode raccroché ou décroché quel que soit le type de ce téléphone, le procédé est caractérisé en ce qu'il comporte les étapes suivantes :
- mémoriser au moins un autre couple de points de polarisation, dit économique, qui définit des caractéristiques de tension et de courant maximales de la ligne qui sont inférieures à celles définies par le couple de points de polarisation de défaut,
- sélectionner un couple de points de polarisation parmi le couple de points de polarisation de défaut et ledit au moins un couple de points de polarisation économique selon le résultat d'un test comparatif de l'ensemble de ces couples de points de polarisation, et
- configurer le port FXS à partir du couple de points de polarisation ainsi sélectionné.

Selon un premier mode de réalisation, la sélection d'un couple de points de polarisation est réalisée par les étapes suivantes :
- configurer le port FXS à partir d'un couple de points de polarisation économique,
- émettre un signal d'appel entrant vers le téléphone via la ligne,
- en cas de décroché du téléphone par un utilisateur avant l'expiration d'une période de temps,
   - émettre un message vocal à destination de ce téléphone,
   - recueillir le ressenti positif ou négatif de l'utilisateur à l'issue de l'écoute de ce message vocal,
- en cas de non décroché du téléphone par un utilisateur à l'issue de la période de temps prédéterminée, un ressenti négatif est attribué à ce couple de points de polarisation,
- réitérer ces étapes pour chaque couple de points de polarisation économique,
- en cas de ressenti positif de l'utilisateur pour un couple de points de polarisation économique, ce couple de points de polarisation économique est sélectionné,
- dans le cas où aucun ressenti n'est positif, le couple de points de polarisation de défaut est sélectionné.

Selon une variante de ce premier mode de réalisation, une fois que l'utilisateur a décroché le combiné de son téléphone suite à l'émission du signal de sonnerie, cet utilisateur est invité à parler à l'issue d'un premier message vocal. Un second message est ainsi émis par le téléphone à destination de la passerelle, enregistré pendant une période de temps déterminée puis réémis vers le téléphone. Le ressenti attribué à un couple de points de polarisation est alors déterminé à partir du ressenti de l'utilisateur issu de l'écoute des deux messages vocaux.

Cette variante est avantageuse car elle permet de tester la qualité des communications bidirectionnelles entre la passerelle et le téléphone.

Selon une variante, plusieurs couples de points de polarisation sont à traiter, les couples des points de polarisation sont alors ordonnés pour qu'ils soient traités du plus économe au moins économe et le couple de points de polarisation est sélectionné dès que le ressenti utilisateur est positif, le procédé s'arrêtant alors dès que le ressenti de l'utilisateur est positif.

Cette variante est avantageuse car elle permet une sélection rapide du couple de points de polarisation le plus économe qui convient à l'utilisateur sans avoir pour cela à traiter l'ensemble de ces couples de points de polarisation.

Selon un second mode de réalisation, la sélection d'un couple de points de polarisation est réalisée par les étapes suivantes :
- mesure d'une caractéristique électrique de la ligne alors chargée par le téléphone, et
- si cette mesure est supérieure à un seuil alors le couple de points de polarisation sélectionné est le couple de points de polarisation de défaut, sinon ce couple est le couple de points de polarisation économique.

Selon un mode de réalisation, la caractéristique électrique de la ligne mesurée est la capacité de charge de la ligne.

Selon un mode de réalisation, la sélection du couple de points de polarisation tient compte du ressenti de l'utilisateur et de la mesure de la caractéristique électrique de la ligne.

Selon un mode de réalisation, la sélection du couple de points de polarisation est réalisée lorsque le téléphone est raccordé pour la première fois au port FXS, et/ou au démarrage de la passerelle et/ou par déclenchement à distance et/ou cycliquement.

Selon un mode de réalisation, la sélection du couple de points de polarisation est réalisée soit par la passerelle soit par un opérateur distant suite à la réception par cet opérateur de la mesure d'une caractéristique électrique de la ligne et/ou du ressenti de l'utilisateur.

Ce mode de réalisation permet le contrôle, par un opérateur, de la configuration à distance du port FXS à partir du ressenti de l'utilisateur ou de la mesure d'une caractéristique électrique de la ligne.

Selon un mode de réalisation, l'une quelconque des étapes du procédé peut être préemptée par l'utilisateur.

Selon un mode de réalisation, l'utilisateur peut forcer le port FXS à être configuré avec un couple de points de polarisation économique ou avec le couple de points de polarisation de défaut.

La présente invention concerne également un programme d'ordinateur, caractérisé en ce qu'il comprend des instructions pour mettre en oeuvre, par une passerelle résidentielle, le procédé mentionné ci-dessus lorsque ledit programme est exécuté par un processeur de la passerelle résidentielle.

La présente invention concerne aussi des moyens de stockage, caractérisés en ce qu'ils stockent un programme d'ordinateur comprenant des instructions pour mettre en oeuvre, par une passerelle résidentielle, le procédé mentionné ci-dessus, lorsque ledit programme est exécuté par un processeur de la passerelle résidentielle.

De plus, la présente invention concerne une passerelle résidentielle comportant au moins un port FXS prévu pour qu'un téléphone analogique soit raccordé via une ligne, la passerelle comportant :
- des moyens pour configurer un port FXS à partir d'un couple de points de polarisation, dit de défaut, qui définit des caractéristiques de tension et de courant maximales de la ligne qui sont prédéterminées pour assurer le bon fonctionnement du téléphone en mode raccroché ou décroché quel que soit le type de ce téléphone. La passerelle résidentielle est caractérisée en ce qu'elle comporte également
- des moyens pour obtenir au moins un autre couple de points de polarisation, dit économique, qui définit des caractéristiques de tension et de courant maximales de la ligne qui sont inférieures à celles définies par le couple de points de polarisation de défaut,
- des moyens pour sélectionner un couple de points de polarisation parmi le couple de points de polarisation de défaut et ledit au moins un couple de points de polarisation économique selon le résultat d'un test comparatif de l'ensemble de ces couples de points de polarisation, et
- des moyens pour configurer le port FXS à partir du couple de points de polarisation ainsi sélectionné.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente une architecture fonctionnelle d'une passerelle résidentielle.
La Fig. 2 représente des courbes tension/courant qui caractérisent le comportement électrique de téléphones analogiques.
La Fig. 3 montre une courbe de tension/courant qui représente un profil de consommation électrique d'un port FXS.
La Fig. 4 représente une courbe de tension/courant qui représente un profil de consommation électrique économique d'un port FXS.
La Fig. 5 représente un diagramme des étapes d'un premier mode de réalisation du procédé d'optimisation de la consommation électrique d'une passerelle résidentielle.
La Fig. 6 représente des variantes de ce premier mode de réalisation du procédé d'optimisation de la consommation électrique d'une passerelle résidentielle.
La Fig. 7 représente un diagramme des étapes d'un second mode de réalisation de l'étape de sélection d'un couple de points de polarisation.
La Fig. 8 illustre une méthode pour mesurer la capacité d'une ligne reliant un téléphone à une passerelle résidentielle.

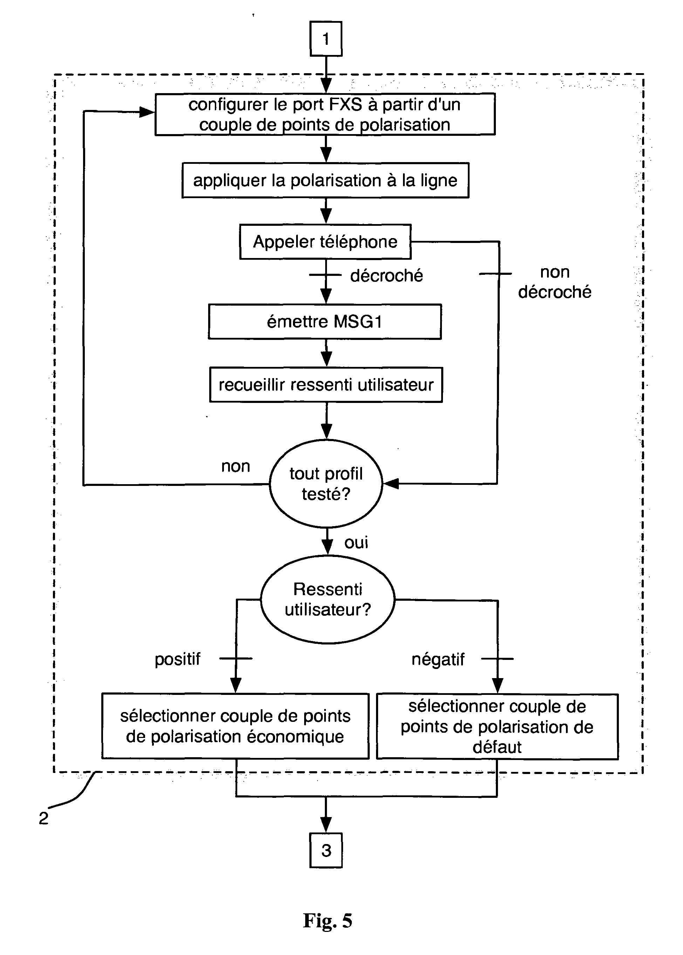

Par la suite, on considèrera que la passerelle résidentielle de la Fig. 1 qui comporte un port FXS prévu pour qu'un téléphone analogique soit raccordé via un câble qui forme une ligne (au sens téléphonie du terme) entre ce port FXS et ce téléphone. Toutefois, la passerelle peut également comporter plus d'un port FXS sur chacun desquels peut être raccordé un téléphone analogique, sans pour autant sortir de la portée de la présente invention car, dans ce cas, chaque port FXS est traité indépendamment des autres par le procédé décrit en relation avec les Figs. 5 à 8.

Selon la présente invention, la passerelle comporte des moyens pour obtenir au moins un autre couple de points de polarisation PPEi, dit économique, qui définit des caractéristiques de tension et de courant maximales de la ligne qui sont inférieures à celles définies par le couple de points de polarisation de défaut, référencé par la suite PPD.

Ces moyens sont par exemple la mémoire non volatile ROM de la passerelle ROM ou encore une mémoire sur un équipement distant et les moyens d'interfaçage avec un réseau de communication pour que la passerelle puisse accéder à cet équipement et obtenir ce (ou ces) couple(s) de polarisation.

La Fig. 4 représente une courbe de tension/courant qui représente un profil de consommation électrique économique d'un port FXS. Sur cette courbe, le couple de points de polarisation P1 et P3 est par exemple utilisé. Le point P1 est celui précédemment décrit à la Fig. 3. Le point P3 correspond au cas où l'intensité du courant est maximale, ici de l'ordre de 20mA, et la tension de ligne maximale est de 33V. Selon cet exemple de couple de points de polarisation économique, seule l'intensité du courant qui sera appliquée sur la ligne lorsque le téléphone est en mode décroché a été réduite par rapport au point de polarisation P2 du couple de polarisation de défaut PPD. Ce couple de points de polarisation PPEi (P1 et P3) permet alors de réduire la puissance consommée par le téléphone lorsque ce dernier est en communication.

La passerelle comporte également des moyens pour sélectionner un couple de points de polarisation parmi le couple de points de polarisation PPD et le (ou les) couples de points de polarisation PPEi selon le résultat d'un test comparatif de l'ensemble de ces couples de points de polarisation.

Selon un mode de réalisation, le processeur PROC est capable d'exécuter des instructions chargées dans la mémoire RAM à partir de la mémoire ROM, d'une mémoire externe (non représentée à la Fig. 1), d'un support de stockage, tel qu'une carte SD ou autre, ou d'un réseau de communication. Lorsque la passerelle est mise sous tension, le processeur est capable de lire de la mémoire RAM des instructions et de les exécuter. Ces instructions forment un programme d'ordinateur PROG qui cause la mise en oeuvre, par le processeur PROC, de tout ou partie des procédés décrits ci-après en relation avec les Figs. 5 à 8.

Tout ou partie des procédés décrits ci-après en relation avec les Figs. 5 à 8 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un processeur, tel que le processeur PROC, ou être implémenté sous forme matérielle par une machine ou un composant dédié, tel qu'un FPGA (*Field*-*Programmable Gate Array* en anglais ou *Matrice de Portes Programmable sur Champ* en français) d'un ASIC *(Application-Specific Integrated Circuit* en anglais ou *Circuit Intégré Spécifique à une Application* en français) ou d'un processeur réseau (*Network processor* en anglais).

De manière générale, la présente invention concerne un procédé d'optimisation de la consommation électrique de la passerelle résidentielle décrite ci-dessus.

Le procédé est caractérisé en ce qu'il comporte une étape 1 au cours de laquelle est mémorisé au moins un autre couple de points de polarisation PPEi.

Le procédé comporte également une étape 2 au cours de laquelle est sélectionné un couple de points de polarisation parmi le couple de points de polarisation PPD et ledit au moins un couple de points de polarisation économique PPEi selon le résultat d'un test comparatif de l'ensemble de ces couples de points de polarisation.

Le procédé comporte également une étape 3 au cours de laquelle est configuré le port FXS à partir du couple de points de polarisation ainsi sélectionné.

La Fig. 5 représente un diagramme des étapes d'un premier mode de réalisation du procédé d'optimisation de la consommation électrique d'une passerelle résidentielle.

Selon ce mode de réalisation, la sélection d'un couple de points de polarisation est réalisée par les étapes suivantes. Tout d'abord, le port FXS est configuré à partir d'un couple de points de polarisation économique PPEi et un signal d'appel entrant est alors émis vers le téléphone via la ligne.

Deux cas peuvent alors se produire : soit les caractéristiques de tension et courant de ligne permettent au téléphone de détecter ce signal de signalisation sur la ligne et d'émettre un signal de sonnerie, soit ces caractéristiques ne le permettent pas.

Dans le cas de non décroché du téléphone par l'utilisateur à l'issue d'une période de temps prédéterminée T1, c'est-à-dire dans le cas où le signal de sonnerie n'est pas émis ou que ce signal de sonnerie est émis mais que l'utilisateur ne décroche pas le téléphone au cours de cette période de temps T1, un ressenti négatif est attribué à ce couple de points de polarisation et un autre couple de points de polarisation économique PPEi est considéré.

Dans le cas où l'utilisateur décroche son téléphone suite à l'émission du signal de sonnerie et avant l'expiration de la période de temps T1, un message vocal MSG1 est alors émis à destination de ce téléphone. Ce message MSG1 est soit mémorisé dans une mémoire, par exemple la mémoire ROM ou encore issu d'un dispositif distant alors connecté à la passerelle.

A l'issue de la restitution de ce message par le téléphone, l'utilisateur donne son ressenti sur la qualité de l'écoute, ressenti qui peut être soit positif, s'il considère que cette écoute est globalement satisfaisante, soit négatif s'il considère que cette qualité d'écoute ne l'est pas.

Les moyens GUI peuvent, par exemple, être utilisés à cet effet en présentant un formulaire sur un écran qui est rempli par l'utilisateur. Les données de ce formulaire sont alors enregistrées dans une mémoire soit de la passerelle soit d'un équipement distant en association avec le couple de points de polarisation PPEi. Ces données de formulaire peuvent porter, de plus, sur un ensemble de réponse qui permet de savoir, par exemple, si l'utilisateur a entendu la sonnerie du téléphone et/ou le message MSG1.

Chaque couple de points de polarisation PPEi est ainsi traité pour qu'à l'issue de ce traitement un ressenti soit positif, soit négatif, soit attribué à chacun de ces couples de points de polarisation économiques.

Dans le cas où le ressenti de l'utilisateur pour un couple de points de polarisation PPEi est positif, ce couple de points de polarisation PPEi est sélectionné et dans le cas où aucun ressenti n'est positif, le couple de points de polarisation PPD est sélectionné.

Dans une variante de ce mode de réalisation relative au cas où plusieurs couples de points de polarisation PPEi sont à traiter, les couples des points de polarisation sont ordonnés pour qu'ils soient traités du plus économe au moins économe et le couple de points de polarisation est sélectionné dès que le ressenti utilisateur est positif. Le procédé s'arrête alors dès que le ressenti de l'utilisateur est positif.

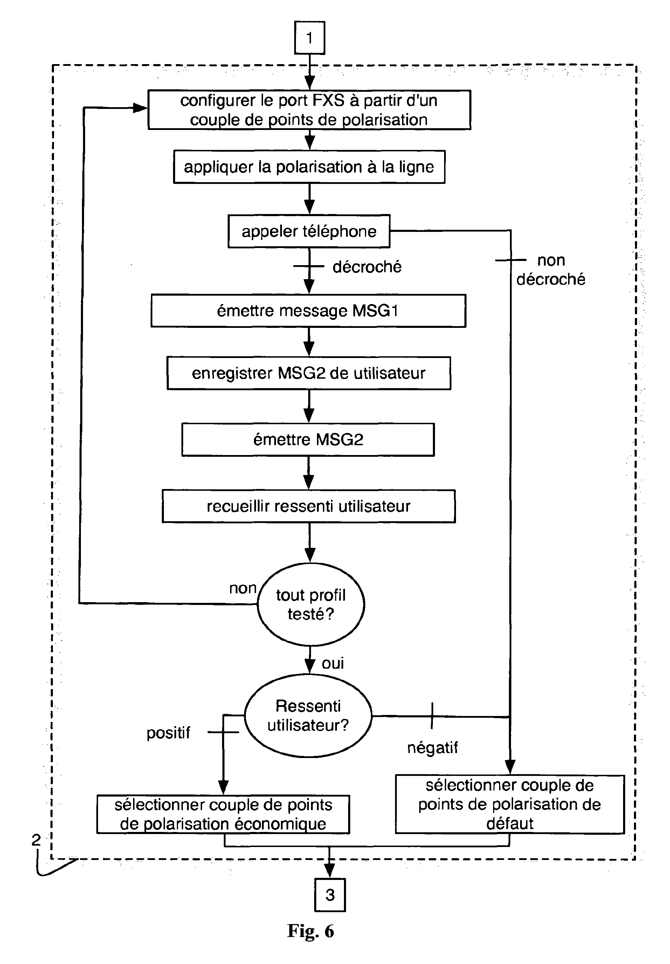

La Fig. 6 représente des variantes de ce premier mode de réalisation.

Selon l'une de ces variantes, une fois que l'utilisateur a décroché le combiné de son téléphone suite à l'émission du signal de sonnerie, cet utilisateur est invité à parler suite à l'émission d'un message MSG1 et un message vocal MSG2 est ainsi émis par le téléphone à destination de la passerelle. Ce message MSG2 est enregistré dans une mémoire de la passerelle, par exemple la mémoire RAM, puis réémis par la passerelle à destination du téléphone.

Le ressenti attribué à un couple de points de polarisation PPEi est alors déterminé à partir du ressenti de l'utilisateur issu de l'écoute des MSG1 et MSG2.

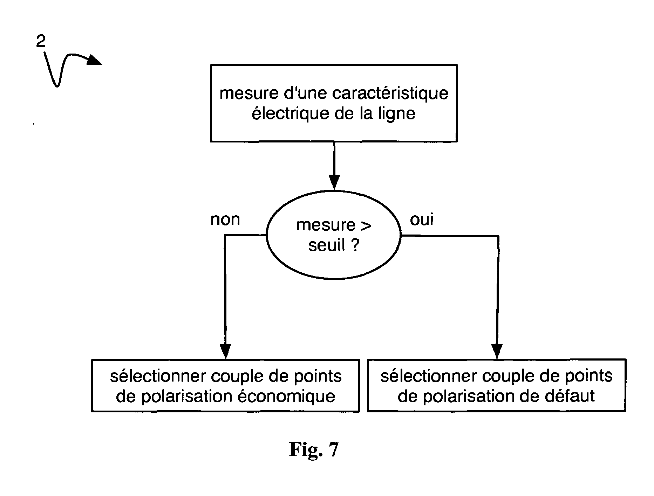

La Fig. 7 représente un second mode de réalisation de ce procédé.

Selon ce mode de réalisation, une caractéristique électrique de la ligne alors chargée par le téléphone est mesurée et si cette mesure est supérieure à un seuil alors le couple de points de polarisation sélectionné est le couple de points de polarisation PPD, sinon ce couple est un couple de points de polarisation PPEi.

Selon un mode de réalisation, la mesure de cette caractéristique électrique de la ligne est la capacité de charge de la ligne.

La capacité de charge de la ligne est habituellement quantifiée par une mesure REN *(Ringer Equivalent Number* en anglais) ou encore LN *(Load Number* en anglais). Le REN est une notion introduite dans la norme BELLCORE GR909 pour caractériser le comportement électrique d'un téléphone par rapport à un téléphone du type S63.

Un REN supérieur ou égal à 1 représente l'effet de charge d'un circuit de boucle d'un téléphone analogique ancien tel que les téléphones de type S63.

Si la mesure REN est supérieure à 1 alors le couple de points de polarisation sélectionné est le couple de points de polarisation PPD, sinon ce couple est un couple de points de polarisation PPEi. Il est alors inutile de configurer le port FXS à partir du couple de points de polarisation PPEi car ce téléphone compenserait les caractéristiques de tension et de courant de ligne définies par les points de polarisation et la qualité de communication serait dégradée. Par ailleurs, si ce REN est inférieur à 1, le téléphone analogique raccordé au port FXS ne compense pas les conditions de ligne longue et la configuration du port FXS à partir du couple de points de polarisation PPEi est alors avantageuse en termes d'économie d'énergie.

Il est connu de l'état de la technique deux méthodes pour calculer la capacité de charge d'une ligne.

L'une de ces méthodes est de mesurer le courant de ligne durant l'émission d'un signal de sonnerie et l'autre de mesurer le temps de décharge condensateur.

Selon la première de ces méthodes, un signal de sonnerie se présentant sous forme d'un train d'impulsions, est émis sur la ligne. Ce signal de sonnerie est défini pour que le téléphone reste muet malgré la réception de ce signal de sonnerie.

Ce signal de sonnerie, qui peut être mémorisé dans une mémoire de la passerelle, est, par exemple, un signal alternatif de 16V et de fréquence 20Hz sur une composante continue de 18V.

Lors de l'émission de ce signal de sonnerie, le courant de ligne est mesuré à l'aide d'échantillons prélevés sur la ligne. Si le combiné du téléphone est décroché par l'utilisateur pendant le prélèvement de ces échantillons de mesure, la mesure du courant de ligne est annulée. Le prélèvement de 50 échantillons à des intervalles de 10ms suffit à estimer le courant alternatif consommé par la ligne au moyen du processeur PROC de la passerelle. Ensuite, on vient comparer cette valeur à un tableau de valeurs préenregistrées issues de mesures réalisées sur des charges connues de REN. La connaissance de 4 points de mesures de courant alternatifs faites sur des étalons de 0, 1, 3 et 5 REN suffit pour estimer la charge de la ligne. En effet, ces valeurs étant stockées dans la mémoire non volatile de la passerelle, on peut par une approximation quasi-linéaire en déduire la valeur du REN de la ligne à partir de la mesure du courant alternatif précédemment réalisé.

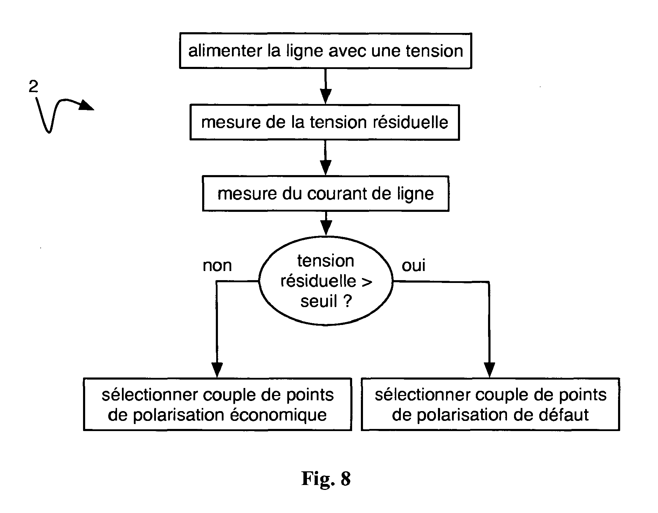

Une autre méthode, illustrée à la Fig. 8, pour calculer la capacité de charge d'une ligne est de mesurer le temps de décharge du condensateur qui est dans le téléphone. Cette méthode permet de détecter les téléphones qui présentent de fortes capacités utilisées, notamment, pour s'autoalimenter.

Son principe consiste à alimenter la ligne en tension continue, par exemple 48V, puis à couper cette alimentation et à mesurer la tension résiduelle de ligne au bout d'un intervalle de temps. Si cette tension résiduelle de ligne est supérieure à un seuil, par exemple 10V, il en est déduit que le téléphone raccordé est un téléphone qui a une forte capacité. Dans ce cas, le couple de points de polarisation sélectionné est le couple de points de polarisation de défaut PPD. Dans le cas contraire, ce couple est le couple de points de polarisation PPEi.

Cette méthode peut être appliquée en remplacement de la mesure de REN car la plupart des téléphones qui présentent de fortes capacités compensent également les conditions de ligne longue. Mais elle peut également être utilisée en complément de la mesure de REN car il existe aussi des téléphones qui ont de fortes capacités sans pour cela compenser des conditions de ligne longue.

Selon un mode de réalisation du procédé, la sélection du couple de points de polarisation tient compte du ressenti de l'utilisateur (Fig. 5) et de la mesure de la caractéristique électrique de la ligne (Fig. 6).

Par exemple, lorsque le couple de points de polarisation sélectionné à l'issue du second mode de réalisation est un couple de points de polarisation économique PPEi, un message, par exemple par mail ou via l'interface GUI de la passerelle, peut alors être envoyé à l'utilisateur pour l'inciter à lancer le premier mode de réalisation de l'étape de sélection (Fig. 5) et le couple de points de polarisation sélectionné est celui qui a recueilli un ressenti positif.

Selon un mode de réalisation, la sélection du couple de points de polarisation est réalisée lorsque le téléphone est raccordé pour la première fois au port FXS, et/ou au démarrage de la passerelle et/ou par déclenchement à distance et/ou cycliquement.

Selon un mode de réalisation, la sélection du couple de points de polarisation est réalisée, soit par la passerelle, soit par un opérateur distant suite à la réception par cet opérateur de la mesure d'une caractéristique électrique de la ligne et/ou du ressenti de l'utilisateur.

Selon un mode de réalisation, l'une quelconque des étapes du procédé peut être préemptée par l'utilisateur.

Selon un mode de réalisation, l'utilisateur peut forcer le port FXS à être configuré avec un couple de points de polarisation économique ou avec le couple de points de polarisation de défaut.

## Revendications

1. Procédé d'optimisation de la consommation électrique d'une passerelle résidentielle comportant au moins un port FXS auquel est raccordé un téléphone analogique via une ligne, ledit port FXS étant configuré à partir d'un couple de points de polarisation PPD, dit de défaut, qui définit des caractéristiques de tension et de courant maximales de la ligne qui sont prédéterminées pour assurer le bon fonctionnement du téléphone en mode raccroché ou décroché quels que soit le type de ce téléphone,
le procédé comportant les étapes suivantes :
- mémoriser au moins un autre couple de points de polarisation PPEi, dit économique, qui définit des caractéristiques de tension et de courant maximales de la ligne qui sont inférieures à celles définies par le couple de points de polarisation de défaut PPD,
- sélectionner un couple de points de polarisation parmi le couple de points de polarisation de défaut PPD et ledit au moins un couple de points de polarisation économique PPEi, selon le résultat d'un test comparatif de l'ensemble de ces couples de points de polarisation, et
- configurer le port FXS à partir du couple de points de polarisation ainsi sélectionné,
ledit procédé étant **caractérisé en ce que**, au cours de la sélection d'un couple de points de polarisation:
- le port FXS est configuré à partir d'un couple de points de polarisation économique,
- un signal d'appel entrant est émis vers le téléphone via la ligne,
- en cas de décroché du téléphone par un utilisateur avant l'expiration d'une période de temps T1,
- un message vocal (MSG1) est émis à destination de ce téléphone,
- le ressenti positif ou négatif de l'utilisateur est recueilli à l'issu de l'écoute de ce message vocal (MSG1),
- en cas de non décroché du téléphone par un utilisateur à l'issue de la période de temps prédéterminée T1, un ressenti négatif est attribué à ce couple de points de polarisation,
- ces étapes sont réitérées pour chaque couple de points de polarisation économique,
- en cas de ressenti positif de l'utilisateur pour un couple de points de polarisation économique, ce couple de points de polarisation économique est sélectionné,
- dans le cas où aucun ressenti n'est positif, le couple de points de polarisation de défaut est sélectionné.

2. Procédé selon la revendication 1, dans lequel une fois que l'utilisateur a décroché le combiné de son téléphone suite à l'émission du signal de sonnerie, cet utilisateur est invité à parler à l'issu d'un premier message vocal (MSG1) et un second message vocal (MSG2) est ainsi émis par le téléphone à destination de la passerelle, enregistré pendant une période de temps prédéterminée puis réémis vers le téléphone, le ressenti attribué à un couple de points de polarisation étant alors déterminé à partir du ressenti de l'utilisateur issu de l'écoute des deux messages vocaux (MSG1) et (MSG2).

3. Procédé selon la revendication 1 ou 2, dans lequel plusieurs couples de points de polarisation (PPEi) sont à traiter, les couples des points de polarisation sont alors ordonnés pour qu'ils soient traités du plus économe au moins économe et le couple de points de polarisation est sélectionné dès que le ressenti utilisateur est positif, le procédé s'arrêtant alors dès que le ressenti de l'utilisateur est positif.

4. Procédé selon l'une des revendications 1 à 3, dans lequel la sélection d'un couple de points de polarisation est réalisée par mesure d'une caractéristique électrique de la ligne alors chargée par le téléphone, et
en ce que, si cette mesure est supérieure à un seuil, alors le couple de points de polarisation sélectionné est le couple de points de polarisation de défaut, sinon ce couple est le couple de points de polarisation économique.

5. Procédé selon la revendication 4, dans lequel la caractéristique électrique de la ligne mesurée est la capacité de charge de la ligne.

6. Procédé selon l'une des revendications 4 à 5, dans lequel la sélection du couple de points de polarisation tient compte du ressenti de l'utilisateur et de la mesure de la caractéristique électrique de la ligne.

7. Procédé selon l'une des revendications 1 à 6, dans lequel la sélection du couple de points de polarisation est réalisée lorsque le téléphone est raccordé pour la première fois au port FXS, et/ou au démarrage de la passerelle et/ou par déclenchement à distance et/ou cycliquement.

8. Procédé selon l'une des revendications 1 à 7, dans lequel la sélection du couple de points de polarisation est réalisée soit par la passerelle soit par un opérateur distant suite à la réception par cet opérateur de la mesure d'une caractéristique électrique de la ligne et/ou du ressenti de l'utilisateur.

9. Procédé selon l'une des revendications précédentes, dans lequel l'une quelconque des étapes peut être préemptée par l'utilisateur.

10. Procédé selon l'une des revendications précédentes, dans lequel l'utilisateur peut forcer le port FXS à être configuré avec un couple de points de polarisation économique ou avec le couple de points de polarisation de défaut.

11. Programme d'ordinateur, **caractérisé en ce qu'**il comprend des instructions pour mettre en oeuvre, par une passerelle résidentielle, le procédé selon l'une des revendications 1 à 10, lorsque ledit programme est exécuté par un processeur de la passerelle résidentielle.

12. Moyens de stockage, **caractérisé en ce qu'**ils stockent un programme d'ordinateur comprenant des instructions pour mettre en oeuvre, par une passerelle résidentielle, le procédé selon l'une des revendications 1 à 10, lorsque ledit programme est exécuté par un processeur de la passerelle résidentielle.

13. Passerelle résidentielle comportant au moins un port FXS prévu pour qu'un téléphone analogique soit raccordé via une ligne, la passerelle comportant :
- des moyens pour configurer un port FXS à partir d'un couple de points de polarisation PPD, dit de défaut, qui définit des caractéristiques de tension et de courant maximales de la ligne qui sont prédéterminées pour assurer le bon fonctionnement du téléphone en mode raccroché ou décroché quels que soit le type de ce téléphone,
- des moyens pour obtenir au moins un autre couple de points de polarisation PPEi, dit économique, qui définit des caractéristiques de tension et de courant maximales de la ligne qui sont inférieures à celles définies par le couple de points de polarisation de défaut PPD,
- des moyens pour sélectionner un couple de points de polarisation parmi le couple de points de polarisation de défaut PPD et ledit au moins un couple de points de polarisation économique PPEi selon le résultat d'un test comparatif de l'ensemble de ces couples de points de polarisation, et
- des moyens pour configurer le port FXS à partir du couple de points de polarisation ainsi sélectionné,
**caractérisée en ce que** les moyens pour sélectionner un couple de points de polarisation sont prévus pour:
- configurer le port FXS à partir d'un couple de points de polarisation économique,
- émettre un signal d'appel entrant vers le téléphone via la ligne,
- en cas de décroché du téléphone par un utilisateur avant l'expiration d'une période de temps T1,
- émettre un message vocal (MSG1) à destination de ce téléphone,
- recueillir le ressenti positif ou négatif de l'utilisateur à l'issue de l'écoute de ce message vocal (MSG1),
- en cas de non décroché du téléphone par un utilisateur à l'issue de la période de temps prédéterminée T1, un ressenti négatif est attribué à ce couple de points de polarisation,
- réitérer ces étapes pour chaque couple de points de polarisation économique,
- en cas de ressenti positif de l'utilisateur pour un couple de points de polarisation économique, ce couple de points de polarisation économique est sélectionné,
- dans le cas où aucun ressenti n'est positif, le couple de points de polarisation de défaut est sélectionné.

## Patentansprüche

1. Verfahren zur Optimierung des Stromverbrauchs eines Kabelmodems, das wenigstens einen FXS-Port beinhaltet, an den über eine Leitung ein analoges Telefon angeschlossen ist, wobei der FXS-Port anhand eines sogenannten Standard-Vorspannungspunktpaars PPD konfiguriert ist, das die maximalen Spannungs- und Stromwerte der Leitung festlegt, die vorbestimmt werden, um die Funktionstüchtigkeit des Telefons im aufgelegten oder abgenommenen Zustand ungeachtet des Telefon-Typs zu gewährleisten,
wobei das Verfahren die folgenden Schritte umfasst :
- das Speichern wenigstens eines weiteren sogenannten Spar-Vorspannungspunktpaars PPEi, das die maximalen Spannungs- und Stromeigenschaften der Leitung festlegt, die niedriger sind, als diejenigen, die vom Standard- Vorspannungspunktpaar festgelegt wurden,
- das Auswählen eines Vorspannungspunktpaars unter dem Standard-Vorspannungspunktpaar PPD und dem wengistens einen Spar-Vorspannungspunktpaar PPEi gemäß dem Ergebnis eines vergleichenden Tests der Gesamtheit dieser Vorspannungspunktpaare,
- das Konfigurieren des FXS-Ports anhand des derart ausgewählten Vorspannungspunktpaars,
wobei dasgenannte Verfahren **dadurch gekennzeichnet ist, dass** während des Auswählens eines Vorspannungspunktpaars :
- der FXS-Port anhand eines Spar-Vorspannungspunktpaars konfiguriert wird,
- ein Signal für einen eingehenden Anruf über die Leitung an das Telefon gesendet wird,
- im Fall der Abnahme des Telefons durch einen Benutzer vor Ablauf einer Zeitdauer T1,
- eine Sprachnachricht (MSG1) an dieses Telefon gesendet wird,
- die positive oder negative Benutzerwahrnehmung nach beendeter Abhörung der Sprachnachricht (MSG1) eingeholt wird,
- im Fall der Nichtabnahme des Telefons durch einen Benutzer nach Ablauf der vorbestimmten Zeitdauer T1, diesem Vorspannungspunktpaar eine negative Benutzerwahrnehmung zugeordnet wird,
- diese Schritte für jedes Spar-Vorspannungspunktpaar wiederholt werden,
- im Fall einer positiven Benutzerwahrnehmung eines Spar-Vorspannungspunktpaars, dieses Spar-Vorspannungspunktpaar ausgewählt wird,
- im Fall, dass keine Wahrnehmung positiv ist, das Standard-Vorspannungspunktpaar gewählt wird.

2. Verfahren gemäß Patentanspruch 1, in dem der Benutzer, sobald er den Hörer seines Telefons infolge der Abgabe eines Klingelsignals abgenommen hat, aufgefordert wird, am Ende einer ersten Sprachnachricht (MSG1) zu sprechen und eine zweite Sprachnachricht (MSG2) auf diese Weise über das Telefon an das Kabelmodem gesendet, für eine vorbestimmte Zeitdauer registriert und dann erneut an das Telefon gesendet wird, wobei die einem Vorspannungspunktpaar zugeordnete Wahrnehmung dann anhand der Benutzerwahrnehmung nach beendeter Abhörung der beiden Sprachnachrichten (MSG1) und (MSG2) bestimmt wird.

3. Verfahren gemäß Patentanspruch 1 oder 2, in dem mehrere Vorspannungspunktpaare (PPEi) zu verarbeiten sind, die Vorspannungspunktpaare so in eine Reihenfolge gebracht werden, dass sie vom sparsamsten zum am wenigsten sparsamen verarbeitet werden und das Vorspannungspunktpaar wird ausgewählt, sobald die Benutzerwahrnehmung positiv ist, wobei das Verfahren endet, sobald die Benutzerwahrnehmung positiv ist.

4. Verfahren gemäß einem der Patentansprüche 1 bis 3, in dem die Wahl eines Vorspannungspunktpaars durch Messung einer elektrischen Eigenschaft der dann vom Telefon belasteten Leitung erfolgt und wenn diese Messung höher als eine Schwelle ist, das ausgewählte Vorspannungspunktpaar dann das Standard-Vorspannungspunktpaar ist, andernfalls ist dieses Paar das Spar-Vorspannungspunktpaar.

5. Verfahren gemäß Patentanspruch 4, in dem die gemessene elektrische Eigenschaft die Ladekapazität der Leitung ist.

6. Verfahren gemäß einem der Patentansprüche 4 bis 5, in dem die Auswahl des Vorspannungspunktpaars die Benutzerwahrnehmung und die Messung der elektrischen Eigenschaft der Leitung berücksichtigt.

7. Verfahren gemäß einem der Patentansprüche 1 bis 6, in dem die Auswahl des Vorspannungspunktpaars erfolgt, wenn das Telefon erstmals an den FXS-Port angeschlossen wird und/oder beim Start des Kabelmodems und/oder durch ferngesteuerte und/oder zyklische Auslösung.

8. Verfahren gemäß einem der Patentansprüche 1 bis 7, in dem die Auswahl des Vorspannungspunktpaars entweder über das Kabelmodem oder über einen entfernten Betreiber erfolgt, nachdem dieser Betreiber die Messung einer elektrischen Eigenschaft der Leitung und/oder die Benutzerwahrnehmung erhalten hat.

9. Verfahren gemäß einem der vorangehenden Patentansprüche, in dem irgend einer der Schritte vom Benutzer festgelegt werden kann.

10. Verfahren gemäß einem der vorangehenden Patentansprüche, in dem der Benutzer den FXS-Port zwingen kann, mit einem Spar-Vorspannungspunktpaar oder mit dem Standard-Vorspannungspunktpaar konfiguriert zu werden.

11. Computerprogramm, **dadurch gekennzeichnet, dass** es Anweisungen umfasst, die dazu dienen, das Verfahren gemäß einem der Patentansprüche 1 bis 10 über ein Kabelmodem umzusetzen, wenn das genannte Programm von einem Prozessor des Kabelmodems ausgeführt wird.

12. Lagerungsmittel, **dadurch gekennzeichnet, dass** sie ein Computerprogramm speichern, das Anweisungen umfasst, die dazu dienen, das Verfahren gemäß einem der Patentansprüche 1 bis 10 über ein Kabelmodem umzusetzen, wenn das genannte Programm von einem Prozessor des Kabelmodems ausgeführt wird.

13. Kabelmodem beinhaltend wenigstens einen FXS-Port, der dazu vorgesehen ist, ein analoges Telefon über eine Leitung anzuschließen, wobei das Kabelmodem folgendes umfasst:
- Mittel, um den FXS-Port anhand eines sogenannten Standard-Vorspannungspunktpaars (PPD) zu konfigurieren, das die maximalen Spannungsund Stromeigenschaften der Leitung festlegt, die vorbestimmt werden, um die Funktionstüchtigkeit des Telefons im aufgelegten oder abgenommenen Zustand ungeachtet des Telefon-Typs zu gewährleisten,
- Mittel, um wenigstens ein weiteres sogenanntes Spar-Vorspannungspunktpaar PPEi zu erhalten, das die maximalen Spannungs- und Stromeigenschaften der Leitung festlegt, die niedriger sind, als diejenigen, die vom Standard- Vorspannungspunktpaar PPD festgelegt wurden,
- Mittel, um ein Vorspannungspunktpaar unter dem Standard-Vorspannungspunktpaar PPD und demgenannten wenigstens einen Spar-Vorspannungspunktpaar PPEi gemäß dem Ergebnis eines vergleichenden Tests der Gesamtheit dieser Vorspannungspunkte auszuwählen, und
- Mittel, um den FXS-Port anhand des so ausgewählten Vorspannungspunktpaars zu konfigurieren,
**dadurch gekennzeichnet, dass** die Mittel zur Auswahl eines Vorspannungspunktpaars vorgesehen sind, um:
- den FXS-Port anhand eines Spar-Vorspannungspunktpaars zu konfigurieren,
- ein Signal für einen eingehenden Anruf über die Leitung an das Telefon zu senden,
- im Fall der Abnahme des Telefons durch einen Benutzer vor Ablauf einer Zeitdauer T1,
- eine Sprachnachricht (MSG1) an dieses Telefon zu senden,
- die positive oder negative Benutzerwahrnehmung nach beendeter Abhörung dieser Sprachnachricht (MSG1) einzuholen,
- im Fall der Nichtabnahme des Telefons durch einen Benutzer nach Ablauf der vorbestimmten Zeitdauer, diesem Vorspannungspunktpaar eine negative Wahrnehmung zuzuordnen,
- diese Schritte für jedes Spar- Vorspannungspunktpaar zu wiederholen,
- im Fall einer positiven Benutzerwahrnehmung für ein Spar-Vorspannungspunktpaar, dieses Spar-Vorspannungspunktpaar auszuwählen,
- im Fall, dass keine Wahrnehmung positiv ist, das Standard-Vorspannungspunktpaar auszuwählen.

## Claims

1. A method for optimizing the electrical consumption of a residential gateway comprising at least one FXS port to which is connected an analog telephone via a line, said FXS port being configured on the basis of a, so-called default, pair of polarization points PPD which defines maximum voltage and current characteristics of the line which are predetermined so as to ensure the proper operation of the telephone in on-hook or off-hook mode whatever the type of this telephone,
the method comprising the following steps:
- storing at least one other, so-called economic, pair of polarization points PPEi which defines maximum voltage and current characteristics of the line which are lower than those defined by the default pair of polarization points PPD,
- selecting a pair of polarization points from among the default pair of polarization points PPD and said at least one economic pair of polarization points PPEi, according to the result of a comparative test of the set of these pairs of polarization points, and
- configuring the FXS port on the basis of the pair of polarization points thus selected,
said method being **characterized in that**, in the course of the selection of a pair of polarization points:
- the FXS port is configured on the basis of an economic pair of polarization points,
- an incoming call signal is sent to the telephone via the line,
- in case the telephone should be placed off-hook by a user before the expiry of a time period T1,
- a voice message (MSG1) is sent destined for this telephone,
- the positive or negative sentiment of the user is garnered on completion of listening to this voice message (MSG1),
- in case the telephone should not be placed off-hook by a user on completion of the predetermined time period T1, a negative sentiment is assigned to this pair of polarization points,
- these steps are repeated for each economic pair of polarization points,
- in case of positive sentiment of the user for an economic pair of polarization points, this economic pair of polarization points is selected,
- in the case where no sentiment is positive, the default pair of polarization points is selected.

2. The method as claimed in claim 1, in which once the user has placed the handset of his telephone off-hook subsequent to the sending of the ringtone signal, this user is invited to speak on completion of a first voice message (MSGl) and a second voice message (MSG2) is thus sent by the telephone destined for the gateway, recorded during a predetermined time period and then re-sent to the telephone, the sentiment assigned to a pair of polarization points then being determined on the basis of the sentiment of the user arising from listening to the two voice messages (MSG1) and (MSG2).

3. The method as claimed in claim 1 or 2, in which several pairs of polarization points PPEi are to be processed, the pairs of polarization points are then ordered so that they are processed from the most economical to the least economical and the pair of polarization points is selected as soon as the user sentiment is positive, the method then stopping as soon as the sentiment of the user is positive.

4. The method as claimed in one of claims 1 to 3, in which the selection of a pair of polarization points is carried out by measurement of an electrical characteristic of the line then loaded by the telephone, and
in that, if this measurement is greater than a threshold, then the selected pair of polarization points is the default pair of polarization points, otherwise this pair is the economic pair of polarization points.

5. The method as claimed in claim 4, in which the electrical characteristic of the line measured is the load capacity of the line.

6. The method as claimed in one of claims 4 to 5, in which the selection of the pair of polarization points takes account of the sentiment of the user and of the measurement of the electrical characteristic of the line.

7. The method as claimed in one of claims 1 to 6, in which the selection of the pair of polarization points is carried out when the telephone is connected for the first time to the FXS port, and/or on the booting of the gateway and/or by remote triggering and/or cyclically.

8. The method as claimed in one of claims 1 to 7, in which the selection of the pair of polarization points is carried out either by the gateway or by a remote operator subsequent to the reception by this operator of the measurement of an electrical characteristic of the line and/or of the sentiment of the user.

9. The method as claimed in one of the preceding claims, in which any one of the steps can be preempted by the user.

10. The method as claimed in one of the preceding claims, in which the user can force the FXS port to be configured with an economic pair of polarization points or with the default pair of polarization points.

11. A computer program, **characterized in that** it comprises instructions for implementing, by a residential gateway, the method as claimed in one of claims 1 to 10, when said program is executed by a processor of the residential gateway.

12. A storage means, **characterized in that** it stores a computer program comprising instructions for implementing, by a residential gateway, the method as claimed in one of claims 1 to 10, when said program is executed by a processor of the residential gateway.

13. A residential gateway comprising at least one FXS port designed so that an analog telephone is connected via a line, the gateway comprising:
- means for configuring an FXS port on the basis of a, so-called default, pair of polarization points PPD which defines maximum voltage and current characteristics of the line which are predetermined so as to ensure the proper operation of the telephone in on-hook or off-hook mode whatever the type of this telephone,
- means for obtaining at least one other, so-called economic, pair of polarization points PPEi which defines maximum voltage and current characteristics of the line which are lower than those defined by the default pair of polarization points PPD,
- means for selecting a pair of polarization points from among the default pair of polarization points PPD and said at least one economic pair of polarization points PPEi according to the result of a comparative test of the set of these pairs of polarization points, and
- means for configuring the FXS port on the basis of the pair of polarization points thus selected, **characterized in that** the means for selecting a pair of polarization points are designed to:
- configure the FXS port on the basis of an economic pair of polarization points,
- send an incoming call signal to the telephone via the line,
- in case the telephone should be placed off-hook by a user before the expiry of a time period T1,
- send a voice message (MSG1) destined for this telephone,
- garner the positive or negative sentiment of the user on completion of listening to this voice message (MSG1),
- in case the telephone should not be placed off-hook by a user on completion of the predetermined time period T1, a negative sentiment is assigned to this pair of polarization points,
- repeat these steps for each economic pair of polarization points,
- in case of positive sentiment of the user for an economic pair of polarization points, this economic pair of polarization points is selected,
- in the case where no sentiment is positive, the default pair of polarization points is selected.
